# EUROPÄISCHE PATENTSCHRIFT

(11) **EP 0 484 712 B1**
(45) Veröffentlichungstag und Bekanntmachung des Hinweises auf die Patenterteilung: **03.01.1996**
(21) Anmeldenummer: 91117788.9
(22) Anmeldetag: 18.10.1991
(51) Int. Cl.: A47J 41/02, B65D 77/06

(54) **Vorrichtung zur Aufnahme und Ausgabe von Flüssigkeiten**
Liquid containing and dispensing device
Dispositif destiné à contenir et dispenser des liquides

(30) Priorität: 09.11.1990 DE 4035724
(43) Veröffentlichungstag der Anmeldung: 13.05.1992
(73) Patentinhaber: Kraft Jacobs Suchard SA, CH-8008 Zürich (CH)
(72) Erfinder: Kurtzahn, Frithjof, W-2803 Weyhe-Leeste (DE); Thime, Lutz, W-2870 Delmenhorst (DE)
(74) Vertreter: Bolte, Erich, Dipl.-Ing.

(56) Entgegenhaltungen:
- CH-A- 276 989
- DE-U- 9 010 151
- GB-A- 2 033 573
- US-A- 2 564 163

## Beschreibung

Die Erfindung betrifft eine Vorrichtung zur Aufnahme und Ausgabe von heißen oder kalten Flüssigkeiten, insbesondere Getränken, mit einem wärmeisolierenden, einseitig durch einen Deckel verschließbaren Behälter, innerhalb dessen zur Aufnahme der Flüssigkeit ein beutelartiger, gasdichter Innenbehälter aus flexiblem, flach zusammenlegbarem Material angeordnet ist, und mit Mitteln zur Belüftung des Behälters.

Es sind Isolierbehälter zur Warmhaltung von Getränken, insbesondere Kaffeegetränken, bekannt. Die Isolierbehälter weisen einen doppelwandigen äußeren Behälter sowie eine obere Einfüllöffnung auf. Aus der GB-A-203357 ist ein derartiger Behälter mit einem zusätzlichen, herausnehmbaren Inneneinsatz bekannt.

Für die Aufbewahrung von Heißgetränken über einen längeren Zeitraum sind derartige Isolierbehälter durchaus geeignet. Es hat sich jedoch herausgestellt, daß bei aromaempfindlichen Getränken, insbesondere bei Kaffeegetränken, nach kurzer Zeit Aromaverluste auftreten. Bei Kaffeegetränken fehlt es an dem für frisch aufgebrühten Kaffee typischen Aroma.

Aus der US 2564163 ist ein Isolierbehälter mit einem flexiblen Innenbehälter bekannt. Letzterer ist fest mit einem umlaufenden Rand einer Innenseite eines oberen Deckels des Isolierbehälters verbunden. Die Wandung des Isolierbehälters ist auf halber Höhe mit einem Belüftungsventil versehen. Zur Entleerung des Innenbehälters wird über das Belüftungsventil ein erhöhter Druck aufgebaut. Die Handhabung des bekannten Behälters ist sehr umständlich. So ist es beispielsweise nicht möglich, den Innenbehälter auf einfache Weise auszuwechseln. Auch ist das Belüftungsventil ungünstig angeordnet. Der Isolierbehälter ist von dem Belüftungsventil durchbrochen und weist an dieser Stelle eine erhöhte Wärmeleitung auf.

Der Erfindung liegt die Aufgabe zugrunde, die Speicherung von aromaempfindlichen Getränken, insbesondere frisch aufgebrühten Kaffeegetränken, zu verbessern sowie die Handhabung insgesamt und beim Befüllen zu vereinfachen.

Zur Lösung dieser Aufgabe ist die erfindungsgemäße Vorrichtung dadurch gekennzeichnet, daß der Behälter zur Entnahme der Flüssigkeit mit nach unten gekehrtem Deckel vorgesehen ist daß der lösbar im Behälter angeordnete Innenbehälter einen Schlauchstutzen bzw. eine hieran anschließende Schlauchleitung zur Entnahme der Flüssigkeit aufweist, daß die Schlauchleitung durch einen Kanal im Deckel nach außen geführt ist und daß zusätzlich zum Kanal im Deckel eine Luftleitung angeordnet ist, durch die der Behälter bei Entnahme der Flüssigkeit belüftet wird.

Obwohl der Isolierbehälter von Haus aus zur unmittelbaren Aufnahme des Heißgetränks geeignet und bestimmt ist, ist es für die Aromaerhaltung vorteilhaft, das betreffende Heißgetränk innerhalb des Isolierbehälters in einem Innenbehälter aus gas- und flüssigkeitsdichter, zusammenfaltbarer Folie aufzubewahren. Das Heißgetränk wird dabei in den Innenbehälter im Inneren des Isolierbehälters eingefüllt, vorzugsweise derart, daß der Innenraum des Isolierbehälters vollständig von dem gefüllten Innenbehälter ausgefüllt ist. Der Innenbehälter sollte ebenfalls vollständig gefüllt sein, ohne Lufteinschlüsse. Die Zufuhr von Sauerstoff zu dem Heißgetränk, insbesondere zu einem Kaffeegetränk, führt zu unerwünschten Aromaverlusten. Durch den zusammenfaltbaren Innenbehälter aus dünner, gasdichter Folie wird erreicht, daß auch während der Entnahme von Teilportionen des Kaffeegetränks der verbleibende Rest stets gegen die Zufuhr von Luft bzw. Sauerstoff abgeschirmt bleibt, da der Innenbehälter das freie Volumen durch Zusammenfalten bzw. Zusammendrücken der Behälterwandungen entsprechend der Entnahme von Heißgetränken vermindert. Luft dringt lediglich entsprechend der Verringerung des Füllstands in den Isolierbehälter ein. Das Aroma und die Temperatur des Heißgetränks bleiben dadurch über einen langen Zeitraum erhalten.

Beim Gebrauch der erfindungsgemäßen Vorrichtung wird der leere, entlüftete, also flach zusammengelegte Innenbehälter bei abgenommenem Deckel in den Isolierbehälter eingesetzt. Der Isolierbehälter bzw. Teile desselben kommen nicht mit dem Getränk in Berührung. Zu diesem Zweck ist die Schlauchleitung am Innenbehälter angebracht, diese Schlauchleitung wird durch den Kanal im Deckel des Isolierbehälters nach außen geführt. Am außen liegenden Teil bzw. am Ende der Schlauchleitung können dann die erforderlichen Armaturen zum Befüllen des Innenbehälters einerseits und zur Entnahme des Getränks andererseits lösbar angebracht werden. Nach Entleerung des Innenbehälters wird dieser samt Schlauchleitung aus dem Isolierbehälter entnommen und durch einen neuen Innenbehälter ersetzt.

Für die Belüftung des Isolierbehälters ist der Deckel mit einer Luftleitung versehen. Der Isolierbehälter selbst ist demnach nicht durch irgendwelche Öffnungen durchbrochen und in seiner Isolierwirkung unbeeinträchtigt.

Ausführungsbeispiele der Erfindung werden nachfolgend anhand der Zeichnungen näher erläutert. Es zeigt:
- Fig. 1: ein Ausführungsbeispiel der Vorrichtung mit einem Isolierbehälter im Vertikalschnitt,
- Fig. 2: ein anderes Ausführungsbeispiel der Vorrichtung im Leerzustand,
- Fig. 3: die Vorrichtung in gefülltem Zustand nach Beendigung des Füllvorgangs,
- Fig. 4: die Vorrichtung gemäß Fig. 2 und Fig. 3 während der Entleerung durch Entnahme von Flüssigkeit,
- Fig. 5: ein weiteres Ausführungsbeispiel der Vorrichtung im Vertikalschnitt.

Die in den Zeichnungen dargestellten Ausführungsbeispiele betreffen Behälter zur Lagerung und Abgabe von insbesondere frisch aufgebrühten, heißen Kaffeegetränken. Die Behältereinheit besteht jeweils aus einem Außenbehälter, nämlich einem Isolierbehälter 10 und einem in diesem angeordneten Innenbehälter 11.

Der Isolierbehälter 10 ist im Prinzip in herkömmlicher Weise ausgebildet. In einem äußeren Mantel 12 aus festem, belastbarem Material, insbesondere Stahl oder Kunststoff, ist ein Isoliereinsatz 13 angeordnet. Dieser besteht vorzugsweise aus Glas und ist doppelwandig ausgebildet. Ein im Querschnitt bogenförmiger bzw. kalottenartig gestalteter Boden des Isoliereinsatzes 13 sitzt in einem Bodenstück 14 des Isolierbehälters 10 mit ebener unterer Standfläche. An der Oberseite ist der Isolierbehälter 10 samt Isoliereinsatz 13 offen unter Bildung einer Behälteröffnung 15, die sich über den gesamten Innenquerschnitt erstreckt. In dieser Behälteröffnung sitzt ein Deckel 16. Dieser ist ebenfalls wärmeisolierend ausgebildet. Der Deckel 16 ist mit Verschlußmitteln fixiert, z. B. mit Gewinde oder anderen dichtenden Verschlußmitteln herkömmlicher Art.

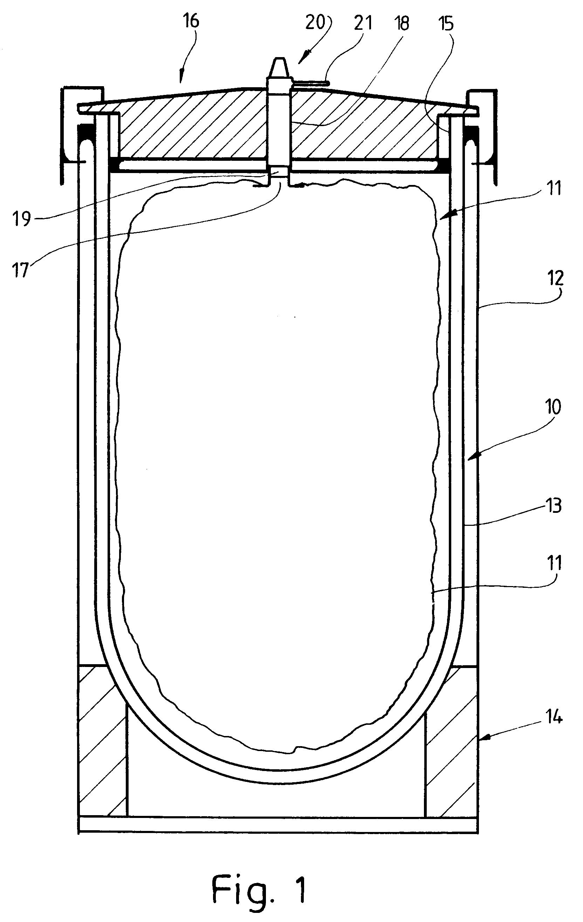

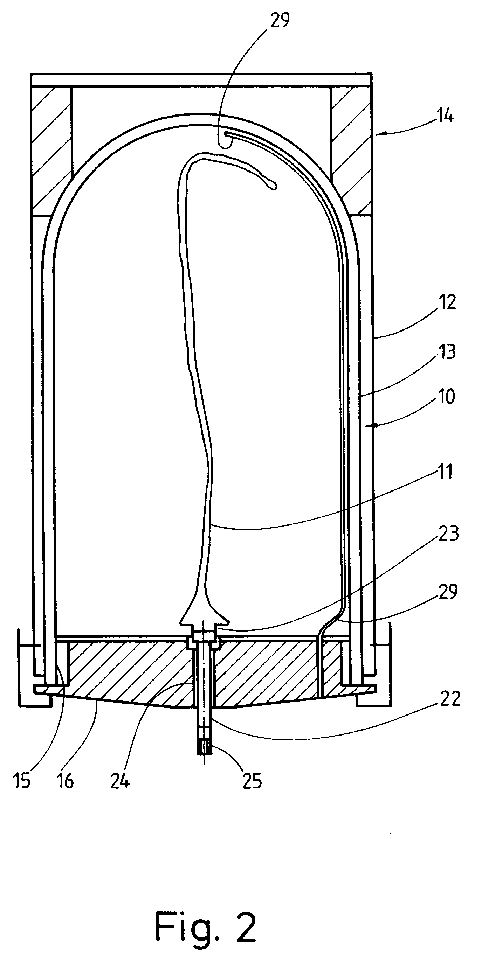

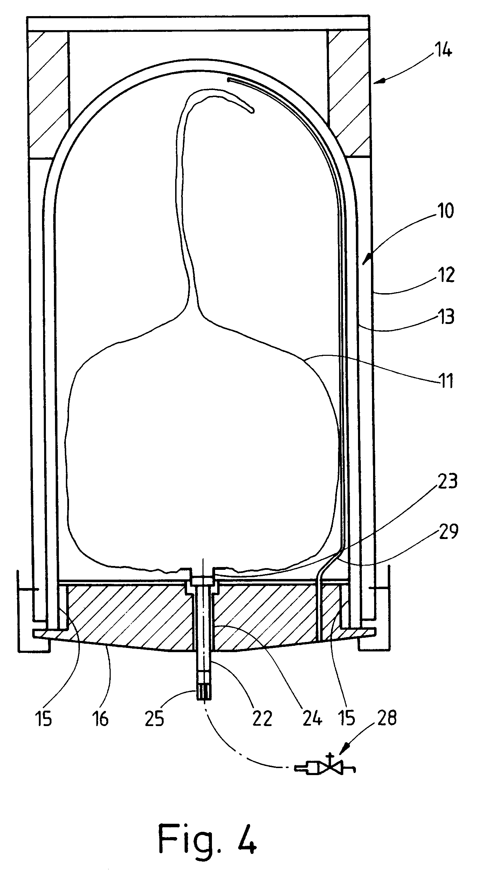

Die aufzunehmende Flüssigkeit bzw. das (heiße) Getränk wird in den Innenbehälter 11 eingefüllt. Dieser besteht aus einer luft- bzw. gasdichten - und natürlich flüssigkeitsdichten - Folie, insbesondere aus einem Laminat mit einer Metallschicht. Der Innenbehälter 11 ist flexibel und in entleertem Zustand flach zusammenlegbar. Dabei liegen Wandungen des Innenbehälters 11 ohne Einschluß von Luft aneinander (Fig. 2). In gefülltem Zustand (Fig. 1, Fig. 3 und Fig. 5) wird der Innenbehälter 11 vollständig durch die Flüssigkeit ausgefüllt, also ohne Lufteinschluß. Der Ausschluß von Luft gilt auch bei Teilfüllung, wie z.B. in Fig. 4.

Der Innenbehälter 11 ist mit mindestens einem schlauch- bzw. rohrförmigen Anschluß versehen für die Einfüllung der Flüssigkeit und für die Entnahme derselben. Bei dem Ausführungsbeispiel gemäß Fig. 1 wird ein verhältnismäßig kurzer Schlauchstutzen 17 des Innenbehälters 11 unmittelbar mit einem Flüssigkeitsdurchgang 18 in einer Wandung des Isolierbehälters 10, hier im Deckel 16 desselben, verbunden. Der Schlauchstutzen 17 ist zu diesem Zweck mit einer Kupplung 19 versehen, die an die Innenseite bzw. an die innenliegende Mündung des Flüssigkeitsdurchgangs 18 angeschlossen wird.

Auf der Außenseite ist der Flüssigkeitsdurchgang 18 mit einem Ventil 20 versehen. Dieses ist so ausgebildet, daß einerseits ein Anschluß an ein passendes Gegenventil einer Vorrichtung zum Zubereiten der Flüssigkeit, insbesondere an eine Kaffee-Brühmaschine möglich ist. Zum anderen ist aber das Ventil 20 auch zur Entnahme von Flüssigkeiten portionsweise aus dem Innenbehälter 11 geeignet. Hierfür ist ein Betätigungsgriff 21 am Ventil 20 angebracht. Bei der Entnahme von Flüssigkeiten wird der gesamte Isolierbehälter 10 um 180 ° gedreht, so daß das Ventil 20 nach unten gerichtet ist. Über einen im einzelnen nicht gezeigten Kanal im Bereich des Flüssigkeitsdurchgangs 18 kann Luft in den Isoliereinsatz 13 gelangen bzw. aus diesem entweichen, so daß der freie, nicht durch den Innenbehälter 11 ausgefüllte Innenraum des Isoliereinsatzes 13 nicht unter Druck oder Unterdruck steht.

Vorteilhafter sind die Ausführungsbeispiele gemäß Fig. 2 bis 5.

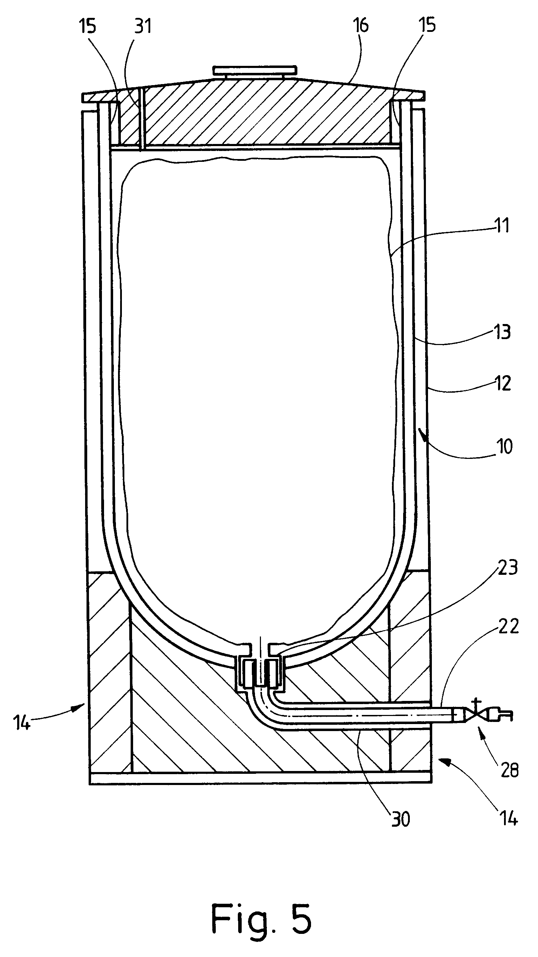

Bei der Ausführungsform nach Fig. 2 bis Fig. 4 ist ein ausreichend bemessenes Schlauchstück 22 oder Rohrstück mit dem Innenbehälter 11 verbunden. Das Schlauchstück 22 kann fest an dem Innenbehälter 11 angebracht sein oder auch lösbar. Fig. 5 zeigt Einzelheiten einer Kupplung zum Verbinden des Schlauchstücks 22 mit einem Anschlußstutzen 23 des Innenbehälters 11. Es handelt sich dabei um eine dichtende und mechanisch belastbare Steck- bzw. Schiebeverbindung.

Das Schlauchstück 22 tritt bei dem Ausführungsbeispiel gemäß Fig. 2 bis Fig. 4 durch einen Kanal 24 in einen Teil bzw. in der Wandung des Isolierbehälters 10 hindurch. Bei dem angesprochenen Ausführungsbeispiel ist mittig ein geradliniger Kanal 24 im Deckel 16 angebracht. Dieser Kanal 24 ist so bemessen, daß das Schlauchstück 22 durch den Kanal 24 hindurchgeschoben werden kann. Andererseits soll aber die Isolierwirkung des Deckels 16 nicht beeinträchtigt werden.

Die Länge des Schlauchstücks 22 ist so gewählt, daß ein ausreichendes Endstück aus dem Deckel 16 an der Außenseite herausragt. Am freien Ende des Schlauchstücks 22 ist eine Ventilkupplung 25 angebracht. Diese ist innenseitig mit einem selbsttätigen Verschlußorgan (nicht gezeigt) versehen. Das Verschlußorgan, insbesondere ein Rückschlagventil bzw. eine Rückschlagklappe, bewirkt einen dichten Verschluß des Innenbehälters 11.

Für die Ingebrauchnahme desselben wird in einer Füllstation, z.B. in einer Brühmaschine, ein Füllrohr 26 (oder Schlauch) an das Ende des Schlauchstücks 22 angeschlossen. Das Füllrohr 26 ist an dem anzuschließenden Ende mit einem Absperrorgan 27 bzw. mit einem Ventil versehen. Eine Steckkupplung an dem Füllrohr 26 bzw. am Absperrorgan 27 bewirkt, daß beim Anschluß an die Ventilkupplung 25 des Schlauchstücks 22 das Verschlußorgan (Rückschlagventil) geöffnet und damit der Durchgang im Schlauchstück 22 frei wird. Beim Öffnen des Absperrorgans 27 kann nunmehr über das Füllrohr 26 Flüssigkeit in den Innenbehälter 11 geleitet bzw. gepumpt werden, bis dieser vollständig gefüllt ist und dabei den Innenraum des Isoliereinsatzes 13 vollständig ausfüllt.

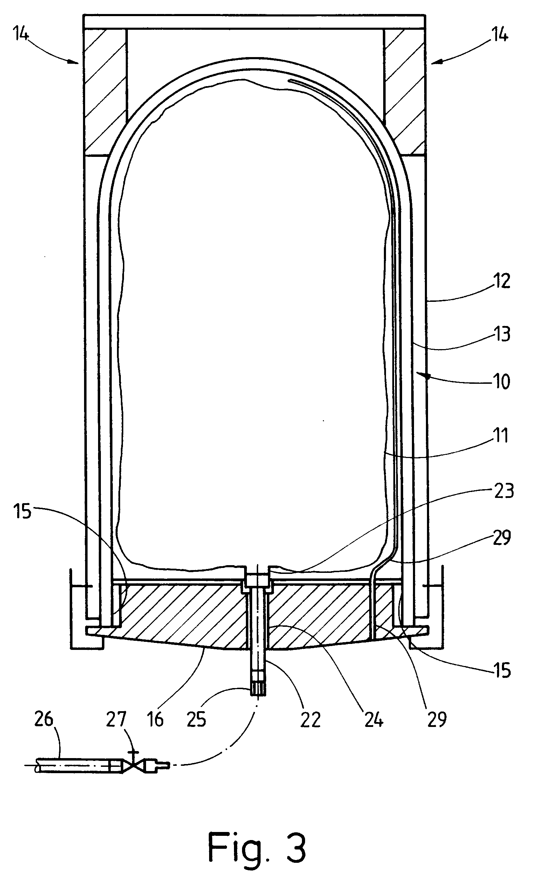

Nach dem Füllen des Innenbehälters 11 wird das Füllrohr 26 vom Schlauchstück 22 abgezogen. Das Verschlußorgan im Bereich der Ventilkupplung 25 wird wieder wirksam und verschließt den Innenbehälter 11. Dieser kann nun transportiert und an geeigneter Stelle aufgestellt werden, und zwar mit dem Deckel 16 nach unten weisend (Fig. 4). Bei dem gezeigten Ausführungsbeispiel ist allerdings vorgesehen, daß auch während der Befüllung (Fig. 3) der Deckel 16 nach unten weist.

Für die Entnahme von Portionen des Getränks im Innenbehälter 11 wird ein Entleerungsorgan, nämlich ein Zapfhahn 28, an das Schlauchstück 22 bzw. an die Ventilkupplung 25 angeschlossen. Dabei wird in der bereits beschriebenen Weise das Verschlußorgan in der Ventilkupplung 25 geöffnet, so daß die Verbindung zum Zapfhahn 28 hergestellt ist. Beim Betätigen desselben kann nunmehr Flüssigkeit aus dem Innenbehälter 11 entnommen werden.

Nach Maßgabe der Entnahme von Flüssigkeit aus dem Innenbehälter 11 wird dieser im flüssigkeitsfreien Bereich wieder flach zusammengefaltet (Fig. 4). Oberhalb des Innenbehälters 11 entsteht dadurch im Isoliereinsatz 13 ein freier Raum. Dieser wird mit Luft ausgefüllt. Eine Luftleitung 29 führt zu diesem Zweck durch den Deckel 16 hindurch nach außen. Die Luftleitung 29 erstreckt sich innerhalb des Isolierbehälters 10 bzw. des Isoliereinsatzes 13 bis zum oberen Bereich desselben (Boden des Isoliereinsatzes 13).

Die Handhabung der Vorrichtung gemäß Fig. 2 bis Fig. 4 geht in der Weise vonstatten, daß bei nach oben weisendem Deckel 16 dieser vom Isolierbehälter 10 abgenommen und mit dem Innenbehälter 11 bestückt wird. Dessen Schlauchstück 22 wird dabei durch den Kanal 24 hindurchgeführt und fixiert. Danach wird der Deckel 16 auf den Isolierbehälter 10 dichtend aufgesetzt. Der Behälter wird nun um 180 ° gedreht und von unten mit Flüssigkeit befüllt. Nach dem Füllen kann die Behältereinheit an beliebiger Stelle in der beschriebenen Weise für die Entnahme von Getränkeportionen eingesetzt werden. Nach der Entleerung und dem Abziehen des Zapfhahns 28 wird zunächst der Deckel 16 abgenommen und sodann der entleerte Innenbehälter 11 beseitigt. Dieser ist für einmaligen Gebrauch bestimmt. Es ist aber auch denkbar, daß nach entsprechender Reinigung der Innenbehälter 11 erneut eingesetzt werden kann.

Bei dem Ausführungsbeispiel der Fig. 5 ist ein Kanal 30 für den Durchtritt des am Innenbehälter 11 angebrachten Schlauchstücks 22 im unteren Bereich des Isolierbehälters 10 angeordnet, nämlich hier im Bodenstück 14. Der Kanal 30 erstreckt sich von der Mitte des Isolierbehälters bzw. des Isoliereinsatzes 13 unter bogenförmiger Umlenkung zu einer Seite des Behälters. Das flexible Schlauchstück 22 wird dabei umgelenkt. An der Außenseite ist in der beschriebenen Weise ein Zapfhahn 28 an dem Schlauchstück 22 angebracht.

Eine Luftleitung 31 für die Be- und Entlüftung des Innenraums ist bei diesem Ausführungsbeispiel als Kanal mit dünnem Querschnitt im Deckel 16 angebracht. Bei der Befüllung und bei der Entleerung wird der Isolierbehälter 10 in der Normalstellung gehalten, also mit nach oben gerichtetem Deckel 16.

## Patentansprüche

1. Vorrichtung zur Aufnahme und Ausgabe von heißen oder kalten Flüssigkeiten, insbesondere Getränken, mit einem wärmemeisolierenden, einseitig durch einen Deckel (16) verschließbaren Behälter (Isolierbehälter 10), innerhalb dessen zur Aufnahme der Flüssigkeit ein beutelartiger, gasdichter Innenbehälter (11) aus flexiblem, flach zusammenlegbarem Material angeordnet ist, und mit Mitteln zur Belüftung des Behälters (10), **dadurch gekennzeichnet,** daß der Behälter (10) zur Entnahme der Flüssigkeit mit nach unten gekehrtem Dekkel (16) vorgesehen ist, daß der lösbar im Behälter (10) angeordnete Innenbehälter (11) einen Schlauchstutzen (23) bzw. eine hieran anschließende Schlauchleitung (22) zur Entnahme der Flüssigkeit aufweist, daß die Schlauchleitung (22) durch einen Kanal (24) im Deckel (16) nach außen geführt ist und daß zusätzlich zum Kanal (24) im Deckel (16) eine Luftleitung (29) angeordnet ist, durch die der Behälter (10) bei Entnahme der Flüssigkeit belüftet wird.

2. Vorrichtung nach Anspruch 1, dadurch gekennzeichnet, daß der Innenbehälter (11) mit dem Schlauchstutzen (23) lösbar im Kanal (24) des Deckels (16) angeordnet ist.

3. Vorrichtung nach Anspruch 1 oder 2, dadurch gekennzeichnet, daß sich die Luftleitung (29) im Innern des Behälters (10) bis unter eine dem Deckel (16) gegenüberliegende Seite des Behälters (10) fortsetzt und somit bei auf dem Deckel (16) stehendem Behälter (10) im oberen Bereich des letzteren (des Behälters 10) endet.

4. Vorrichtung nach einem oder mehreren der Ansprüche 1 bis 3, dadurch gekennzeichnet, daß das Schlauchstück (22) lösbar über eine dichte Kupplung mit dem Anschlußstutzen (23) am Innenbehälter (11) verbunden ist.

5. Vorrichtung nach einem oder mehreren der Ansprüche 1 bis 4, dadurch gekennzeichnet, daß am freien Ende des Schlauchstücks (22) außerhalb des Isolierbehälters (10) eine Ventilkupplung (25) mit innenseitigem, selbsttätigem Verschlußorgan, insbesondere mit einem Rückschlagventil, angeordnet ist, wobei Anschlußorgane, insbesondere ein Füllrohr (26) oder ein Zapfhahn (28), an die Ventilkupplung (25) des Schlauchstücks (22) anschließbar sind.

## Claims

1. Device for receiving and dispensing hot or cold liquids, in particular drinks, having a heat-insulating container (insulating container 10) which can be closed on one side by a lid (16) and within which there is arranged, in order to receive the liquid, a bag-like, gas-tight inner container (11) consisting of a flexible material which can be collapsed to a flat state, and having means for ventilating the container (10), characterized in that, for the removal of the liquid, the container (10) is positioned with the lid (16) turned downwards, in that the inner container (11), arranged releasably in the container (10), exhibits a hose connection stub (23) and an adjoining hose line (22) for the removal of the liquid, in that the hose line (22) is guided to the outside by way of a duct (24) in the lid (16), and in that an air line (29) is arranged in the lid (16) in addition to the duct (24), by way of which air line the container (10) is ventilated upon removal of the liquid.

2. Device according to Claim 1, characterized in that the inner container (11) is arranged, with the hose connection stub (23), releasably in the duct (24) of the lid (16).

3. Device according to Claim 1 or 2, characterized in that the air line (29) extends in the interior of the container (10) to beneath a side of the container (10) located opposite the lid (16), and thus, when the container (10) is standing on the lid (16), terminates in the upper region of the container (10).

4. Device according to one or more of Claims 1 to 3, characterized in that the hose piece (22) is connected releasably to the connection stub (23) on the inner container (11) via a sealed coupling.

5. Device according to one or more of Claims 1 to 4, characterized in that a valve coupling (25) with an interior, automatic closure member, in particular with a nonreturn valve, is arranged outside the insulating container (10), at the free end of the hose piece (22), it being possible for connecting members, in particular a filler tube (26) or a tap (28), to be connected onto the valve coupling (25) of the hose piece (22).

## Revendications

1. Dispositif destiné à contenir et à distribuer des liquides chauds ou froids, en particulier des boissons, comprenant un récipient thermiquement isolant (récipient isolant 10) qui peut être fermé d'un côté par un couvercle (16) et à l'intérieur duquel un récipient interne (11) en forme de sac, étanche aux gaz et en une matière flexible, qui peut être repliée à plat, est agencé pour recevoir le liquide, et des moyens pour l'aération du récipient (10), caractérisé en ce que le récipient (10) est, pour le prélèvement du liquide, pourvu d'un couvercle (16) tourné vers le bas, en ce que le récipient interne (11) agencé de manière détachable dans le récipient (10) présente un raccord de flexible (23) ou un conduit flexible (22) raccordé à celui-ci, pour le prélèvement du liquide, en ce que le raccord de flexible (22) est guidé vers l'extérieur à travers un canal (24) dans le couvercle (16) et en ce que en supplément du canal (24) dans le couvercle (16) est agencé un conduit à air (29) à travers lequel le récipient (10) est aéré lors du prélèvement du liquide.

2. Dispositif suivant la revendication 1, caractérisé en ce que le récipient interne (11) est, avec le raccord de flexible (23), agencé de manière détachable dans le canal (24) du couvercle (16).

3. Dispositif suivant l'une des revendications 1 et 2, caractérisé en ce que le conduit à air (29) se poursuit à l'intérieur du récipient (10) jusqu'en dessous d'un côté du récipient (10) qui est situé à l'opposé du couvercle (16) et en ce que par conséquent il se termine, lorsque le récipient (10) se trouve sur le couvercle (16), dans la zone supérieure du récipient (10).

4. Dispositif suivant une ou plusieurs des revendications 1 à 3, caractérisé en ce que la pièce de flexible (22) est reliée de manière détachable à la pièce de raccordement (23) du récipient interne (11) par l'intermédiaire d'un couplage étanche.

5. Dispositif suivant une ou plusieurs des revendications 1 à 4, caractérisé en ce que, à l'extrémité libre de la pièce de flexible (22), est agencé à l'extérieur du récipient isolant (10) un couplage (25) avec un organe de fermeture automatique du côté interne, en particulier un clapet de retenue, des organes de raccordement, en particulier un tube de remplissage (26) ou un robinet de prise (28), pouvant être raccordés au couplage (25) de la pièce de flexible (22).
